# EUROPEAN PATENT APPLICATION

(11) **EP 3 058 997 A1**
(43) Date of publication of application: **24.08.2016**
(21) Application number: 15290038.7
(22) Date of filing: 23.02.2015
(51) Int. Cl.: B01D 19/00, E21B 21/06

(54) **Extraction device for extracting gases from a wellbore**

(71) Applicant: Geoservices Equipements, 95971 Roissy en France (FR)
(72) Inventor: Chevillard, Francois, 67049 Paris Nord II (FR); Guerriero, Nicolas, 75011 Paris (FR)
(74) Representative: Leonori, Céline

(57) **Abstract**

The disclosure is related to a device for extracting at least one gas contained in a drilling fluid, comprising:
- an extraction enclosure;
- a recovery vessel downstream of the enclosure, connected to a suction apparatus downstream of the recovery vessel
- a gas-extraction pipe having an inlet opening in the extraction enclosure and an outlet opening in the recovery vessel
- a maintenance pipe having an inlet connected to the vessel, an outlet in fluid communication with the outside of the vessel and a siphon-forming section.

The device is configured so that the dimension along a vertical axis between the highest location of the gas-extraction pipe and the inlet is greater than the dimension along the vertical axis between the outlet of the maintenance pipe and the lowest location of the maintenance pipe.

## Description

### BACKGROUND

The present invention relates to a device for extracting at least one gas contained in a drilling mud comprising an enclosure and a gas-extraction pipe downstream to the enclosure and connected to a suction device.

When an oil well or other effluent well (especially gas, vapour, water) is drilled, it is known to carry out an analysis of the gaseous compounds contained in the drilling muds emerging from the well. This analysis enables the geological succession of the formations - traversed during drilling to be reconstituted and is involved in the determination of the possibilities of working the fluid deposits encountered.

This analysis, which is carried out continuously, comprises two main stages. The first stage comprises extracting the gases conveyed by the mud (for example, hydrocarbon compounds, carbon dioxide, hydrogen sulphide). The second stage comprises in qualifying and quantifying the gases extracted.

In the first stage, degassing devices with mechanical agitation of the above-mentioned type (U.S. Pat. No.4,635,735) are often used. The gases extracted from the mud, which are mixed with the carrier gas introduced into the enclosure, are conveyed by suction via the gas-extraction pipe to an analyzer which enables the extracted gases to be quantified.

Extraction of the gases in such device requires vigorous agitation of the mud in the enclosure. Under the effect of this agitation, mud residues are thrown against the walls of the enclosure and in some cases they block the pipe via which the carrier gas is introduced into the enclosure.

Under the effect of suction by the extraction pipe, the pressure in the enclosure decreases. Below a predetermined value, the mud is sucked into the extraction pipe and conveyed through that pipe.

The analysis of the gases then has to be interrupted in order to replace the extraction pipe and to clean the analysis device if they have been polluted.

A system, comprising a venting device has already been developed and is disclosed in particular in patent US No. 7,779,667. The venting device includes a venting pipe tapped into an upstream portion of the extraction pipe in fluid communication with the outside air and a liquid closing the venting pipe. The level of liquid is chosen so that when the pressure is lower than a selected value at the tapping point, the liquid is sucked in the extraction pipe thanks to suction device, opening the venting pipe and avoiding mud suction.

Such as system necessitates maintenance after the venting pipe has been emptied, more particularly such as re-filling the venting pipe with water.

### SUMMARY

The disclosure relates to a device for extracting at least one gas contained in a drilling fluid, comprising an extraction enclosure, a recovery vessel downstream of the enclosure, connected to a suction apparatus downstream of the recovery vessel, a gas-extraction pipe having an inlet opening in the extraction enclosure and an outlet opening in the recovery vessel and a maintenance pipe having an inlet connected to the vessel, an outlet in fluid communication with the outside of the vessel and a siphon-forming section. The dimension along a vertical axis between the highest location of the gas-extraction pipe and the inlet is greater than the dimension along the vertical axis between the outlet of the maintenance pipe and the lowest location of the maintenance pipe.

For the purpose of this disclosure, 'high' and 'low' are taken with a vertical axis as a reference.

During installation of the device, the maintenance pipe is filled with liquid. In operation, as the level of liquid increases in the vessel, the level of liquid is adjusted via the maintenance pipe as soon as the level of liquid in the vessel is higher than a predetermined level relative to the level of the outlet of the maintenance pipe (for instance the level of the outlet when the pressure in the vessel is atmospheric pressure). This makes any maintenance operation during normal operations unnecessary.

Further, when mud residues block the pipe, the pressure in the recovery vessel decreases and the liquid is sucked from maintenance pipe so that the level of liquid in the maintenance pipe reaches the bottom of the siphon-forming portion (lowest location in the maintenance pipe). Then, as pressure is still decreasing in the recovery vessel, and as the height between the lowest location of the maintenance pipe and the highest of the inlet and outlet in the maintenance pipe (corresponding to the level of liquid) is lower than the height difference between the highest location in the gas-extraction pipe and the inlet of the gas-extraction pipe, air from the outside is sucked from the maintenance pipe and not from the enclosure, avoiding the mud to be sucked in the recovery vessel. Further, when the mud residues blocking the pipe have been removed, the liquid in the recovery vessel gets back to its original level by gravity without any human intervention. Once installed, the vessel does not necessitate any maintenance operations.

The disclosure also relates to an assembly for analyzing gas contained in a drilling fluid, comprising a sampling device for sampling drilling mud, the extraction device according to the disclosure, downstream to the sampling device and a gas analysis device for analyzing the gases in the drilling fluid, downstream from the extraction device..

### BRIEF DESCRIPTION OF THE DRAWINGS

Various aspects of this disclosure may be better understood upon reading the following detailed description and upon reference to the drawings in which:
FIG. 1 is a diagrammatic view in vertical section of a drilling installation provided with an analysis assembly according to the disclosure
FIG. 2 is a diagrammatic view in vertical section of a part of the extraction device according to an embodiment of the disclosure;
FIG. 3 is a diagrammatic view in vertical section of a part of the extraction device according to a variant of the embodiment of FIG. 2;
FIG. 4 is a diagrammatic view in vertical section of a part of the extraction device according to another embodiment of the disclosure

### DETAILED DESCRIPTION

One or more specific embodiments of the present disclosure will be described below. These described embodiments are examples of the presently disclosed techniques. Additionally, in an effort to provide a concise description of these embodiments, some features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would still be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Throughout the following, the terms "upstream" and "downstream" are to be understood in relation to the direction of flow of a fluid in a pipe.

An analysis assembly according to the invention is used, for example, in an installation for drilling an oil production well.

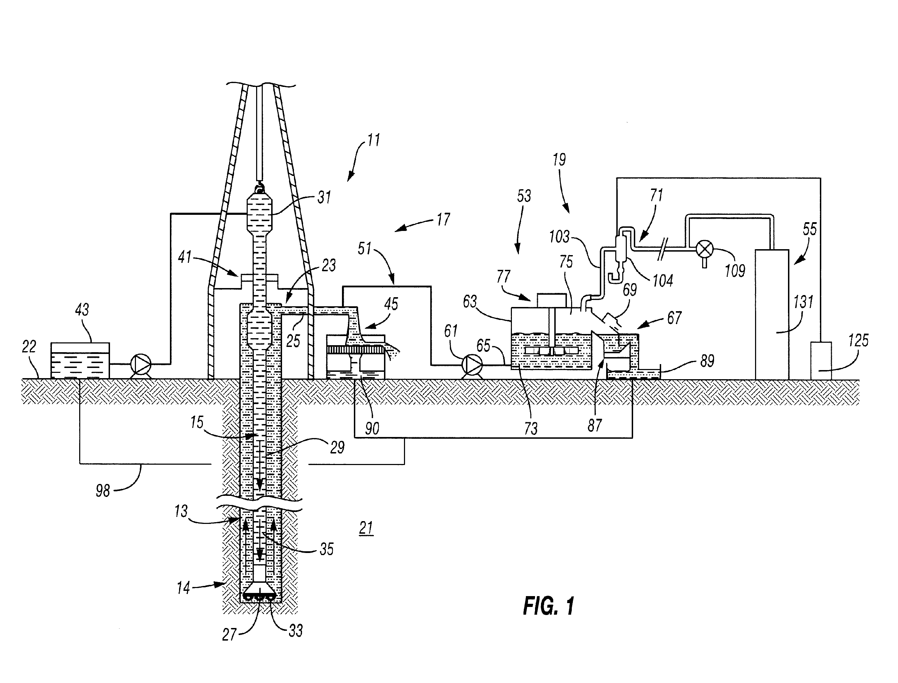

As illustrated in FIG. 1, the installation 11 comprises a drilling duct 13 in a cavity 14 bored by a rotary drilling tool 15, a surface installation 17, and an analysis assembly 19 according to the an embodiment of the disclosure.

The drilling duct 13 is located in the cavity 14 bored in the sub-soil 21 by the rotary drilling tool 15. The duct 13 comprises, at the surface 22, a well head 23 provided with a draining pipe 25.

The drilling tool 15 comprises a drilling head 27, a drilling fitting 29, and a head 31 for the injection of liquid.

The drilling head 27 comprises a drill bit 33 for boring through the rocks of the sub-soil 21. The drilling head 27 is mounted on the lower portion of the drilling fitting 29 and is positioned at the bottom of the drilling duct 13.

The fitting 29 comprises a set of hollow drilling tubes. These tubes delimit an internal space 35 which enables a liquid to be supplied from the surface 22 to the drilling head 27. For that purpose, the head 31 for injecting liquid is screwed onto the upper portion of the fitting 29.

The surface installation 17 comprises an installation 41 for supporting and rotatably driving the drilling tool 15, an injector 43 for injecting the drilling liquid, and a vibrating screen 45.

The injector 43 is connected hydraulically to the injection head 31 in order to introduce a liquid and to cause it to flow in the internal space 35 of the drilling fitting 29.

The vibrating screen 45 collects the liquid which is charged with drilling residues and which is discharged from the draining pipe 25, and separates the liquid from the solid drilling residues.

The analysis assembly 19 comprises a mud sampler 51 tapped into the draining pipe 25, a gas-extraction device 53, and an analyzer 55 for analyzing the extracted gases. In a variant, the mud sampler 51 is tapped into a liquid-receiving tank into which the draining pipe 25 opens.

The mud sampler 51 may comprise a liquid-sampling head located in a projecting manner in the draining pipe 25, a connecting tube, and a peristaltic pump 61, the flow rate of which is adjustable.

The extraction device 53 comprises an enclosure 63, a pipe 65 for supplying mud to the enclosure 63, a pipe 67 for discharging the mud from the enclosure 63, an inlet 69 for introducing a carrier gas into the enclosure 63, tapped in this embodiment into the discharging pipe, and a pipe 71 for extracting the extracted gases from the enclosure 63.

The enclosure 63 comprises a sealed container, the internal volume of which is, for example, from 0.04 litre to 0.3 litre or from 0.3 litre to 3 litres. The enclosure 63 comprises a lower portion 73 in which the mud circulates and an upper portion 75 which has a gaseous cover. The enclosure 63 is also provided with an agitator 77 mounted in a projecting manner in the enclosure 63 and rotatably driven by a motor mounted on the upper portion 75 of the enclosure 63. The agitator 79 comprises an agitating moving body immersed in the mud.

The pipe 65 for supplying mud extends between the outlet of the peristaltic pump 61 and an inlet opening provided in the lower portion 73 of the enclosure 63.

This supply pipe 65 may be provided with a heater (not shown) for heating the mud in order to bring the temperature of the mud to values of from 25 to 120° C., for instance from 60 to 90° C.

The discharge pipe 67 extends between an overflow passage 87 provided in the upper portion 75 of the enclosure 63, and a retaining vat 89 which is to receive the muds discharged from the device 53.

In a variant, the retaining vat 89 is formed by the tank 90 for receiving the liquids extracted from the vibrating screen 45.

The discharge pipe 67 comprises, in succession, a downwardly inclined upstream portion, which forms an angle of approximately 45° with the horizontal, a siphon-forming bent portion, and a substantially vertical downstream portion which is open at its lower end facing the vat 89, above the level of the liquid contained in the vat 89.

The mud introduced into the enclosure 63 via the supply pipe 65 is discharged by overflowing into the discharge pipe 67 through the overflow passage 87. In addition, some of the mud discharged dwells temporarily in the siphon of the discharge pipe 67, which prevents gas from entering the upper portion 75 of the enclosure 63 by way of the lower end of the discharge pipe 67. The introduction of gas into the enclosure 63 is therefore effected purely by the inlet 69 for introducing carrier gas.

The mud collected in the retaining vat 89 and in the tank 90 is recycled to the injector 43 by way of a pipe 98 for recirculating mud.

The inlet 69 for introducing a carrier gas into the enclosure comprise an air intake mounted on the upstream portion of the discharge pipe 67. This air intake opens into an injection passage in the discharge pipe.

In the example illustrated, the carrier gas is constituted by the air surrounding the installation, at atmospheric pressure, so that the pressure in the enclosure 63 is kept substantially constant at the atmospheric pressure when the injection passage is open.

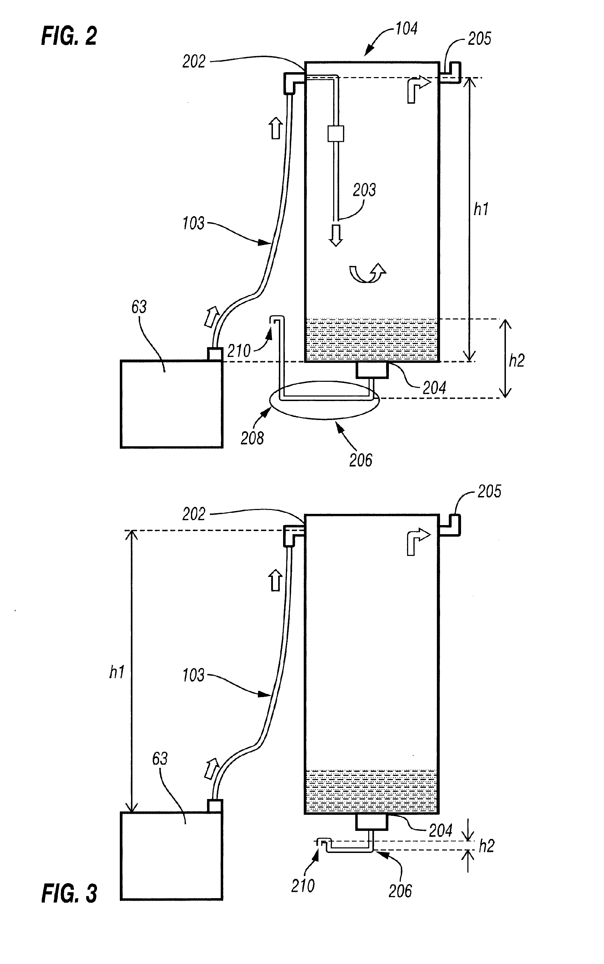

The extraction installation 71 extends between an extraction opening 101 provided in the upper portion 75 of the enclosure, and the analysis device 55. It comprises an upstream portion 103 also called extraction pipe 103, a liquid-recovery vessel 104, and suction apparatus 109. It will be described in more details in relation with FIG.2 to 4.

The recovery vessel 104 has a receiving opening into which the upstream portion 103 opens, and, in its upper portion, a discharge opening connected to the suction apparatus 109.

The analysis device 55 is situated downstream to the suction apparatus. It comprises instrumentation 131 which enables one or more extracted gases to be detected and quantified. The instrumentation 131 comprises, for example, apparatus for infrared detection for quantifying the carbon dioxide, FID (flame ionization detector) chromatographs for detecting hydrocarbons, or also TCD (thermal conductivity detector) chromatographs, depending on the gases to be analyzed. It also comprises a gas chromatography system connected to a mass spectrometer, this system having the abbreviation GC-MS. The detection and simultaneous quantification of a plurality of gases is therefore possible.

FIG. 2 discloses more particularly a part of the extraction device according to the disclosure, according to a first embodiment. In this embodiment, the recovery vessel 104 comprises tapping point 202 in its upper part that is in connection with the gas extraction pipe 103. The gas extraction pipe is brought into the vessel to an outlet 203 which brings the extracted gases to the bottom of the vessel. Some of the extracted gases (water vapor, for instance) may condensate at the bottom of the vessel 104 in a liquid form while other gases (such as hydrocarbons) are extracted via the suction apparatus through an outlet 205. In this embodiment, the gas-extraction pipe situated inside of the recovery vessel enables to increase thermal exchanges between the extracted gases and the gas situated in the vessel and to increase condensation of the water for eliminating it before the analysis. However, such a configuration is optional in the disclosure.

The recovery vessel also comprises a second tapping point 204 forming an inlet for a maintenance pipe 206 at the bottom of the vessel. The tapping point 204 is formed in an horizontal wall situated at the bottom of the recovery vessel or bottom wall of the recovery vessel. This maintenance pipe includes a siphon forming portion 208 and an outlet 210 in fluid communication with the outside and with air at atmospheric pressure. In other word, the maintenance pipe comprises a U-tube. The section of the maintenance pipe is smaller than the section of the vessel, for instance at least 10 times smaller. The inlet and outlet of the maintenance pipe are also situated below the outlet of the gas extraction pipe.

The maintenance pipe enables, when the pressure inside the vessel is at a "normal" operation level, corresponding generally to an atmospheric pressure, to keep the level of the liquid constant in the vessel, avoiding any maintenance operation. Indeed, when the liquid exceeds a certain level, ie, when the pressure inside the vessel is the atmospheric pressure, the level of the outlet of the maintenance pipe, each drop added to the vessel will be evacuated via the maintenance pipe. The liquid condensating in the vessel fills the maintenance pipe by gravity.

The device is configured so that the dimension h1 along the vertical axis between the inlet of the gas-extraction pipe and the highest location of the gas-extraction pipe is greater than the dimension h2 along the vertical axis between the level of the liquid in the recovery vessel in operation and the lowest location of the maintenance pipe. In this configuration, as the system works at atmospheric pressure, the level of the liquid in the recovery vessel in normal operation is same as the height of the outlet of the maintenance pipe. Then, when the pressure in the vessel decreases, for instance when the mud blocks the extraction pipe and no gas is sucked anymore from the extraction enclosure, the level of the liquid situated in the maintenance pipe moves until it is situated at the bottom of the siphon-forming section 208, which may not change considerably the volume of the vessel in view of the section of the respective pipe and vessel. After that, for reaching equilibrium of the device, air is sucked from one of the maintenance pipe and the gas-extraction pipe. In view of the height difference, air sucked from the maintenance pipe reaches the recovery vessel before any element coming from the gas-extraction pipe, avoiding to suck the mud in the recovery vessel.

The device may be configured so that the height difference between the gas-extraction pipe and the highest location of the gas-extraction pipe is greater than the height difference between the outlet of the maintenance pipe and the lowest location of the maintenance pipe by a factor 1.2, 1.5 or more, for instance for also being able to work in operating conditions in which the gas is extracted at a pressure lower than the atmospheric pressure, for which the level of liquid in the vessel in normal operation is higher than the level of the outlet of the maintenance pipe.

Anyway, when the mud is not blocking the gas extraction pipe anymore, pressure comes back to normal in the extraction device and in the vessel, the level of liquid being reinstated at the predetermined level without any human intervention by action of gravity.

It will be noted that after installation, where the recovery vessel is filled with liquid to enable suction of gas from the extraction enclosure, no maintenance of the recovery vessel happens.

As illustrated on FIG.1, the vessel may also be provided with a level or pressure sensor able to generate a signal transmitted to control device 125 for controlling the assembly 19 and signaling when the mud is blocking the extraction. A level sensor may for instance be positioned in the maintenance pipe, between the siphon forming section 208 and the outlet.

In a variant shown in FIG.3, the outlet of the gas-extraction pipe is situated at the tapping point 202. Further, the outlet 210 of the extraction pipe is situated below the inlet of this extraction pipe. The device will work also in this configuration.

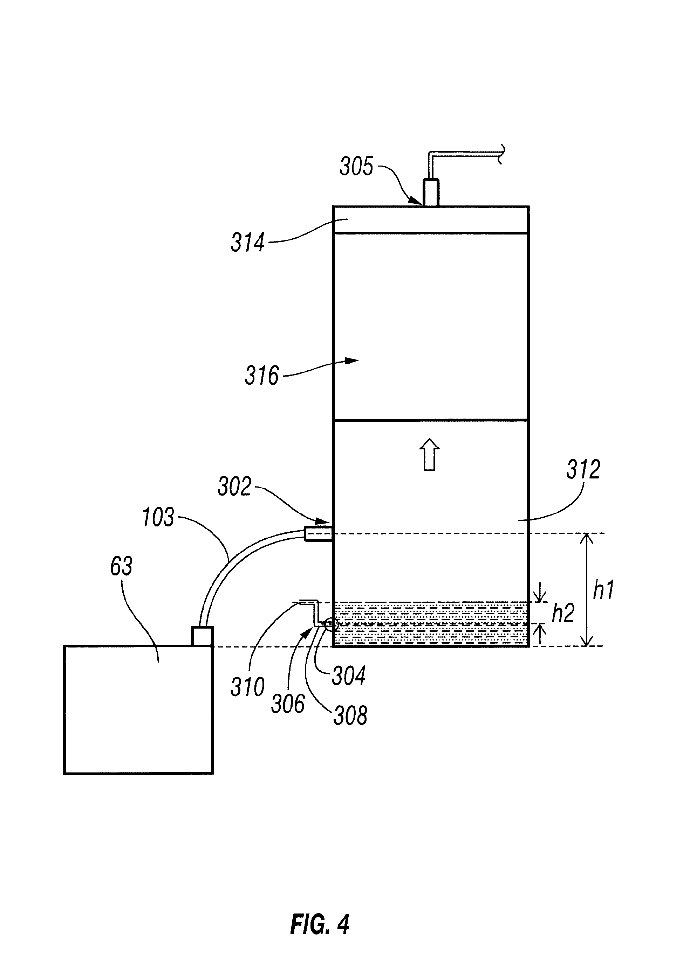

In another embodiment, illustrated in FIG. 4, the tapping point 302 of the gas extracting pipe 103 is situated in the lower part of the vessel 104 and constitutes the outlet of this pipe. The maintenance pipe 306 has an inlet 304 forming a tapping point of the maintenance pipe in the vessel, this tapping point being this time situated in a lower part of a side wall of the recovery vessel. It also comprises and a siphon-forming section 308, and an outlet in fluid communication with the outside 310. The outlet 310 is situated below the outlet 302 of the extraction pipe 103 so the outlet of the gas-extraction pipe is not situated in the liquid avoiding too much heat exchange with the extracted gas which may lead to condensation also of the hydrocarbures in the recovery vessel. However, the outlet of gas-extraction pipe 103 may also be below the level of the outlet and/or inlet of the maintenance pipe. In this embodiment, the dimension h1 along the vertical axis between the inlet of the gas-extraction pipe and the highest location of the gas-extraction pipe is also greater than the dimension h2 along the vertical axis between the outlet of the maintenance pipe and the lowest location of the maintenance pipe.

In this embodiment, the vessel 104 has a first compartment 312 at the bottom of the vessel in which is situated the outlet of the gas extracting pipe 103 and the inlet of the maintenance pipe 306, and a second compartment 314 at the top of the vessel, in which is situated an outlet of the gaseous flow. It also comprises a filter 316 for preventing gaseous water to exit the vessel via the outlet 305 and to condensate it at the bottom of the first compartment. In fact, in this embodiment, the vessel also forms a demister for further eliminating the water in gaseous form from the gaseous flow. The filter of the demister may be any known filter.

Although the preceding description has been described herein with reference to particular means, materials and embodiments, it is not intended to be limited to the particulars disclosed herein; rather it extends to functionally equivalent structures, methods and uses, such as are within the scope of the appended claims. For instance, the gas extracting pipe, vessel and maintenance pipe may be of any appropriate configuration.

The disclosure covers any device for extracting at least one gas contained in a drilling fluid, comprising an extraction enclosure; a recovery vessel downstream of the enclosure, connected to a suction apparatus downstream of the recovery vessel; a gas-extraction pipe having an inlet opening in the extraction enclosure and an outlet opening in the recovery vessel and a maintenance pipe having an inlet connected to the vessel, an outlet in fluid communication with the outside of the vessel and a siphon-forming section, being configured so that the dimension along a vertical axis between the highest location of the gas-extraction pipe and the inlet is greater than the dimension along the vertical axis between the outlet of the maintenance pipe and the lowest location of the maintenance pipe.

The inlet of the maintenance pipe may be situated below the recovery vessel and/or below the outlet of the maintenance pipe, for instance on a bottom wall of the recovery vessel. The inlet of the maintenance pipe may also be situated in the lower half of the recovery vessel.

The dimension along the vertical axis between the highest location of the gas-extraction pipe and the inlet may be greater than the dimension along the vertical axis between the highest of the inlet and outlet of the maintenance pipe and the lowest location of the maintenance pipe by a factor of at least 1,2 or 1.5, which enables to the device to work when the gas is extracted at a pressure lower than the atmospheric pressure.

The section of the maintenance pipe may be at least 10 times smaller than the section of the recovery vessel.

The inlet and/or outlet of the maintenance pipe may be situated below the outlet of the gas-extraction pipe.

The recovery vessel may form a demister. For instance, it may comprise a lower compartment, an upper compartment and a filter interposed between the lower and upper compartments, the outlet of the gas-extraction pipe and the inlet of the maintenance pipe being situated in the lower compartment and the suction apparatus being connected to the upper compartment. The outlet of the maintenance pipe may be lower than the highest location of the lower compartment of the vessel.

The maintenance pipe is filled at least in part with a liquid, when operating for sealing the vessel except for the extraction pipe and obtaining the suction of drilling fluid.

The device may also comprise a supply pipe for supplying drilling fluid into the extraction enclosure, a discharging pipe for discharging the drilling fluid from the enclosure, and a carrier gas inlet for introducing carrier gas into the enclosure.

The disclosure also concerns any assembly with a sampling device for sampling drilling fluid, the extraction device according to the disclosure, downstream to the sampling device and a gas analysis device for analyzing the gases in the drilling fluid, downstream from the extraction device.

## Claims

1. A device for extracting at least one gas contained in a drilling fluid, comprising:
- an extraction enclosure;
- a recovery vessel downstream of the enclosure, connected to a suction apparatus downstream of the recovery vessel
- a gas-extraction pipe having an inlet opening in the extraction enclosure and an outlet opening in the recovery vessel
- a maintenance pipe having an inlet connected to the vessel, an outlet in fluid communication with the outside of the vessel and a siphon-forming section
wherein the device is configured so that the dimension along a vertical axis between the highest location of the gas-extraction pipe and the inlet is greater than the dimension along the vertical axis between the outlet of the maintenance pipe and the lowest location of the maintenance pipe.

2. The device of claim 1, wherein the inlet of the maintenance pipe is situated below the recovery vessel and/or below the outlet of the maintenance pipe.

3. The device of claim 1 or 2, wherein the inlet of the maintenance pipe is situated in the lower half of the recovery vessel.

4. The device of claim 2 or 3, wherein the inlet of the maintenance pipe is situated on a bottom wall of the recovery vessel.

5. The device of any of the preceding claim, wherein the dimension along the vertical axis between the highest location of the gas-extraction pipe and the inlet is greater than the dimension along the vertical axis between the highest of the inlet and outlet of the maintenance pipe and the lowest location of the maintenance pipe by a factor of at least 1,2.

6. The device of the preceding claim, wherein the dimension along the vertical axis between the highest location of the gas-extraction pipe and the inlet is greater than the dimension along the vertical axis between the highest of the inlet and outlet of the maintenance pipe and the lowest location of the maintenance pipe by a factor of at least 1,5.

7. The device of any of the preceding claim wherein the section of the maintenance pipe is at least 10 times smaller than the section of the recovery vessel.

8. The device of any of the preceding claim, wherein the inlet and/or outlet of the maintenance pipe are situated below the outlet of the gas-extraction pipe.

9. The device of any of the preceding claims, wherein the recovery vessel forms a demister.

10. The device of the preceding claim, comprising a lower compartment, an upper compartment and a filter interposed between the lower and upper compartments, wherein the outlet of the gas-extraction pipe and the inlet of the maintenance pipe are situated in the lower compartment and the suction apparatus is connected to the upper compartment.

11. The device of the preceding claim, wherein the outlet of the maintenance pipe is lower than the highest location of the lower compartment of the vessel.

12. The device of any of the preceding claims, wherein the maintenance pipe is filled at least in part with a liquid.

13. The device of any of the preceding claims, comprising :
- A supply pipe for supplying drilling fluid into the extraction enclosure,
- A discharging pipe for discharging the drilling fluid from the enclosure,
- A carrier gas inlet for introducing carrier gas into the enclosure.

14. An assembly for analyzing at least one gas contained in a drilling fluid, comprising :
- A sampling device for sampling drilling fluid,
- The extraction device according to any of the preceding claims, downstream to the sampling device
- A gas analysis device for analyzing the gases in the drilling fluid, downstream from the extraction device.
